# EUROPEAN PATENT APPLICATION

(11) **EP 3 799 038 A1**
(43) Date of publication of application: **31.03.2021**
(21) Application number: 19219811.7
(22) Date of filing: 27.12.2019
(51) Int. Cl.: G10L 15/22, G06F 3/16

(54) **SPEECH CONTROL METHOD AND DEVICE, ELECTRONIC DEVICE, AND READABLE STORAGE MEDIUM**

(30) Priority: 29.09.2019 CN 201910933027
(71) Applicant: Baidu Online Network Technology (Beijing) Co., Ltd., Beijing 100085 (CN)
(72) Inventor: LUO, Yongxi, Beijing, 100085 (CN); WANG, Shasha, Beijing, 100085 (CN)
(74) Representative: Papa, Elisabetta

(57) **Abstract**

The present disclosure provides a speech control method, a speech control device, an electronic device, and a readable storage medium. The method includes: controlling an electronic device to operate in a first operating state, and acquiring an audio clip according to a wake word; obtaining a first control intent corresponding to the audio clip; performing a first control instruction matching the first control intent, and controlling the electronic device to switch from the first operating state to a second operating state; continuously acquiring audio within a preset time period to obtain an audio stream, and obtaining a second control intent corresponding to the audio stream; and performing a second control instruction matching the second control intent.

## Description

### TECHNICAL FIELD

The present disclosure relates to the field of speech recognition and artificial intelligence technology, and more particularly, to a speech control method, a speech control device, an electronic device, and a readable storage medium.

### BACKGROUND

With the continuous development of artificial intelligence technology and terminal technology, artificial intelligence products, such as intelligent speakers and other electronic devices, are popularized, and users can control the electronic device to execute corresponding control instructions through voice. During interacting with the electronic device, and when the preset period for the electronic device to listen the voice of the user is too short, the user needs to repeatedly input the wake word to interact with the electronic device, which affects the user experience.

### SUMMARY

Embodiments of the present disclosure provide a speech control method. The method may be applied to an electronic device, and include: controlling the electronic device to operate in a first operating state, and acquiring an audio clip according to a wake word in the first operating state; obtaining a first control intent corresponding to the audio clip; performing a first control instruction matching the first control intent, and controlling the electronic device to switch from the first operating state to a second operating state; continuously acquiring audio within a preset time period to obtain an audio stream, and obtaining a second control intent corresponding to the audio stream; and performing a second control instruction matching the second control intent.

In an example, continuously acquiring the audio within the preset time period to obtain the audio stream, and obtaining the second control intent corresponding to the audio stream includes: reading configuration information of the second operating state to obtain the preset time period, in which the preset time period is set in response to a user operation; continuously acquiring the audio within the preset time period to obtain the audio stream, and obtaining the second control intent corresponding to the audio stream; and controlling the electronic device to switch from the second operating state back to the first operating state when the second control intent is not obtained within the preset time period.

In an example, obtaining the second control intent corresponding to the audio stream includes: performing speech recognition on the audio stream to obtain an information stream; obtaining at least one candidate intent based on the information stream; and selecting the second control intent matching a current scene from the at least one candidate intent.

In an example, after obtaining the at least one candidate intent based on the information stream, the method further includes: controlling the electronic device to reject responding to the candidate intent that does not match the current scene.

In an example, before controlling the electronic device to switch from the first operating state to the second operating state, the method further includes: determining that the first control intent matches the current scene.

Embodiments of a second aspect of the present disclosure provide a speech control device, which may be applied to an electronic device. The device includes: an executing module, an obtaining module, a switching module, and a control module. The executing module is configured to control the electronic device to operate in a first operating state, and acquire an audio clip according to a wake word in the first operating state. The obtaining module is configured to obtain a first control intent corresponding to the audio clip. The switching module is configured to perform a first control instruction matching the first control intent, control the electronic device to switch from the first operating state to a second operating state, continuously acquire audio within a preset time period to obtain an audio stream, and obtain a second control intent corresponding to the audio stream. The control module is configured to perform a second control instruction matching the second control intent.

Embodiments of a third aspect of the present disclosure provide an electronic device. The electronic device includes at least one processor and a memory. The memory is coupled to the at least one processor, and configured to store executable instructions. When the instructions are executed by the at least one processor, the at least one processor is caused to execute the speech control method according to embodiments of the first aspect of the present disclosure.

Embodiments of a fourth aspect of the present disclosure provides a non-transitory computer readable storage medium having computer instructions stored thereon. When the computer instructions are executed by a processor, the processor is caused to execute the speech control method according to embodiments of the first aspect of the present disclosure.

The present disclosure may have following advantages and beneficial effects. In the first operating state, the audio clip is acquired based on the wake word, a first control intent corresponding to the audio clip is obtained, a first control instruction matching the first control intent is performed, and the first operating state is switched to the second operating state, and in the second operating state, audio is continuously acquired within the preset time period to obtain the audio stream, a second control intent corresponding to the audio stream is obtained, and a second control instruction matching the second control intent is performed. Thus, the user only needs to continuously input the audio stream within the preset time period, to interact with the electronic device without inputting the wake word frequently, thereby simplifying user's operation, satisfying different types of user requirements, and improving user experience.

Other effects of the above alternative embodiments will be described below in conjunction with detailed embodiments.

### BRIEF DESCRIPTION OF THE DRAWINGS

The drawings are for better understanding of the solution and do not constitute a limitation to the present disclosure. The above and/or additional aspects and advantages of embodiments of the present disclosure will become apparent and more readily appreciated from the following descriptions made with reference to the drawings, in which:
FIG. 1 is a flowchart of a speech control method according to some embodiments of the present disclosure.
FIG. 2 is a flowchart of a speech control method according to some embodiments of the present disclosure.
FIG. 3 is a flowchart of a speech control method according to some embodiments of the present disclosure.
FIG. 4 is a schematic diagram of a speech control device according to some embodiments of the present disclosure.
FIG. 5 is a schematic diagram of an electronic device according to some embodiments of the present disclosure.

### DETAILED DESCRIPTION

Embodiments of the present disclosure will be described in detail below with reference to the accompanying drawings, the details of embodiments described herein are exemplary. Therefore, the skilled in the art would understand that, various changes and modifications may be made to the embodiments described herein without departing from the scope and spirit of the present disclosure. For clarity and conciseness, descriptions for well-known functions and structures are omitted in the following description.

A speech control method, a speech control device, an electronic device, and a readable storage medium will be described below with reference to the accompanying drawings.

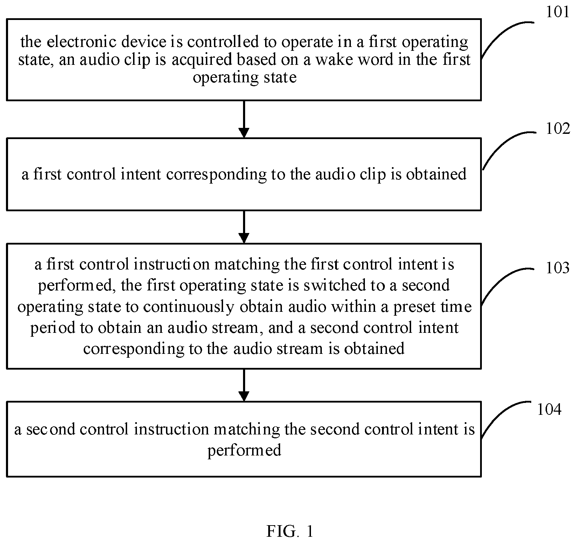

FIG. 1 is a flowchart of a speech control method according to some embodiments of the present disclosure. In an embodiment of the present disclosure, as an example, the speech control method may be applicable to a speech control device. The speech control device may be applied to any electronic device, such that the electronic device can perform the speech control function.

In an embodiment, the electronic device may be a personal computer (PC), a cloud device, a mobile device, an intelligent speaker, etc. The mobile device may be a hardware device having various operating systems, touch screens and/or display screens, such as a telephone, a tablet computer, a personal digital assistant, a wearable device, an on-vehicle device.

As illustrated in FIG. 1, the speech control method may include the following steps.

At block 101, the electronic device is controlled to operate in a first operating state, an audio clip is acquired based on a wake word in the first operating state.

In an embodiment of the present disclosure, the first operating state may be a non-listening state. When the electronic device is in the non-listening state, the user may input the wake word, and the electronic device can acquire the audio clip based on the wake word.

In an example of the present disclosure, the wake word may be preset based on the built-in program of the electronic device, or to satisfy the personalized requirements of the user, the wake word may be set based on the user's requirement, which is not limited in the present disclosure. For example, when the electronic device is an intelligent speaker, the wake word may be "Xiaodu, Xiaodu" .

In an embodiment of the present disclosure, when the electronic device is in the first operating state, the electronic device may detect whether the user inputs the wake word, and when it is detected that the user inputs the wake word, the audio clip input after the wake word may be acquired, and speech recognition may be performed based on the audio clip.

For example, when the electronic device is an intelligent speaker, the intelligent speaker is in the first operating state, and the wake word of the intelligent speaker is "Xiaodu, Xiaodu", when it is detected that the user inputs "Xiaodu, Xiaodu, play song A" or "Xiaodu, Xiaodu, I want to listen to a song", the intelligent speaker may recognize the audio clip "play song A" or "I want to listen to a song" input after the wake word.

At block 102, a first control intent corresponding to the audio clip is obtained.

In an example of the present disclosure, the control intent may be preset based on a built-in program of the electronic device, or the control intent may be set by the user through keywords to improve flexibility and applicability of the method, which is not limited herein. For example, the control intent may include playing audios and videos, querying the weather, or setting an alarm.

It should be noted that, in order to distinguish the control intent corresponding to the audio stream, the control intent corresponding to the audio clip acquired in the first operating state of the electronic device is denoted as the first control intent.

In an embodiment of the present disclosure, when the electronic device is in the first operating state, after the user inputs the wake word through speech, the audio clip input by the user after the wake word can be acquired for speech recognition, and the first control intent corresponding to the audio clip can be obtained.

For example, when the electronic device is an intelligent speaker, when it is detected that the user inputs "Xiaodu, Xiaodu, set an alarm at nine o'clock tomorrow morning" or "Xiaodu, Xiaodu, I want to set an alarm", the intelligent speaker may recognize the audio clip "set an alarm at nine o'clock tomorrow morning" or "I want to set an alarm" input after the wake word, and obtain the first control intent corresponding to the audio clip as setting an alarm.

At block 103, a first control instruction matching the first control intent is performed, the first operating state is switched to a second operating state to continuously obtain audio within a preset time period to obtain an audio stream, and a second control intent corresponding to the audio stream is obtained.

In an example, the preset time period may be set by the electronic device in response to the user operation, and the preset time period may be any time period, which is not limited in the present disclosure. For example, the preset time period may be 30 seconds, or 3 minutes.

In some embodiments, the second operating state may be a listening state. When the electronic device is in the listening state, the user can input the speech control instruction in real time to interact with the electronic device, without inputting the wake word. In some embodiments, the second control intent may be preset based on a built-in program of the electronic device, or in order to improve the flexibility and applicability of the method, the second control intent may be set by the user, which is not limited in the present disclosure. In order to distinguish from the first control intent, the control intent obtained by performing speech recognition on the audio stream in the second operating state is denoted to as the second control intent.

In some embodiments, when the electronic device is in the first operating state, after the first control intent corresponding to the audio clip input by the user after the wake word is obtained, a first control instruction matching the first control intent can be performed when it is determined that the first control intent matches the current scene. In order to facilitate the real-time or continuous interaction between the user and the electronic device, without inputting the wake word frequently, the electronic device may be controlled to switch from the first operating state to the second operating state, to continuously acquire audio within the preset time period to obtain the audio stream, so as obtain the second control intent of the audio stream.

For example, when the current scene is a game scene, and the first control intent acquired by the electronic device in the first operating state is purchasing equipment, since the first control intent matches the game scene, the control instruction corresponding to the first control intent may be performed.

In some embodiments, when the electronic device is in the second operating state, the electronic device may continuously acquire audio within the preset time period to obtain an audio stream, such that the second control intent corresponding to the audio stream can be obtained. Thus, in the second operating state, when the user wants to perform real-time interaction or continuous interaction with the electronic device, the user does not need to frequently input the wake word, and only needs to continuously input the control instruction, and the electronic device may continuously acquire the audio within preset time period to obtain the audio stream, and obtain the second control intent corresponding to the audio stream, to achieve continuous interaction with the electronic device, thereby simplifying the user operation, and improving user experience.

As an example, when the preset time period is 30 seconds, and the intelligent speaker is in the listening state, within the 30 seconds after performing the control instruction matching the first control intent, the user can interact with the intelligent speaker by continuously input audio stream such as "how's the weather tomorrow?", and "play a song", without entering the wake word frequently, and the second control intent corresponding to the audio data continuously input by the user can be obtained. The time duration of the listening time of the electronic device in the listening state may be set by the user according to actual needs, such that requirements of different types of users can be satisfied.

At block 104, a second control instruction matching the second control intent is performed.

In some embodiments, when the electronic device is in the second operating state, the electronic device may continuously acquire audio within the preset time period to obtain the audio stream, and speech recognition may be performed on the audio stream to obtain the second control intent corresponding to the audio stream, and the control instruction matching the second control intent may be performed.

In addition, terms such as "first" and "second" are used herein for purposes of description and are not intended to indicate or imply relative importance or significance. Thus, the feature defined with "first" and "second" may include one or more features.

With the speech control method according to embodiments of the present disclosure, in the first operating state, the audio clip is acquired based on the wake word, a first control intent corresponding to the audio clip is obtained, a first control instruction matching the first control intent is performed, and the first operating state is switched to the second operating state, and in the second operating state, audio is continuously acquired within the preset time period to obtain the audio stream, a second control intent corresponding to the audio stream is obtained, and a second control instruction matching the second control intent is performed. Thus, the user can interact with the electronic device by continuously inputting the audio stream within the preset time period, without inputting the wake word frequently, thereby simplifying user's operation, satisfying different types of user requirements, and improving user experience.

On the basis of the above embodiments, when the electronic device is in the second operating state, the electronic device may continuously acquire the audio within the preset time period to obtain the audio stream, when the second control intent is not obtained within the preset time period, the electronic device may be controlled to switch from the second operating state back to the first operating state. Details will be described in with the following embodiments.

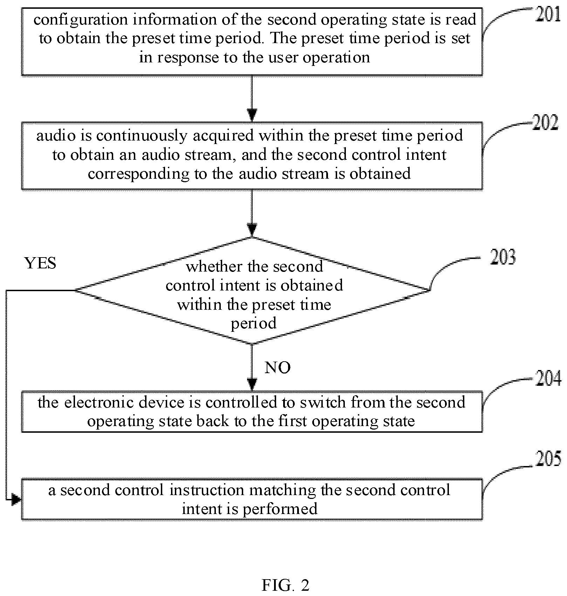

FIG. 2 is a flowchart of a speech control method according to some embodiments of the present disclosure. As illustrated in FIG. 2, the speech control method may further include the following.

At block 201, configuration information of the second operating state is read to obtain the preset time period. The preset time period is set in response to the user operation.

In some embodiments, when the electronic device performs the first control instruction matching the first control intent, and switches from the first operating state to the second operating state, the configuration information in the second operating state may be read to obtain the preset time period.

It should be noted that, the preset time period may be set by the electronic device in response to the user operation, or the preset time period may be set as needs, which is not limited in the present disclosure.

For example, the habit of users interacting with the electronic device may be different, for example, some users may want the electronic device to be in the listening state for a long time period, or some users may prefer a short time period. The listening time period of the electronic device may be set by the user according to his/her needs, such as 3 minutes, or 30 seconds, such that needs of different types of users can be satisfied, and user experience can be improved.

At block 202, audio is continuously acquired within the preset time period to obtain an audio stream, and the second control intent corresponding to the audio stream is obtained.

In an example of the present disclosure, when the electronic device is in the second operating state, the electronic device may continuously acquire audio within the preset time period to obtain the audio stream, and second control intent corresponding to the audio stream can be obtained. Thus, when the user wants to perform real-time interaction or continuous interaction with the electronic device, the user can continuously input the audio data, without inputting the wake word frequently, and the second control intent corresponding to the audio stream can be obtained, thereby simplifying user's operation, and improving user experience.

At block 203, it is determined whether the second control intent is obtained within the preset time period.

In some embodiments, when the electronic device is in the second operating state, the speech control device may monitor whether the user continuously inputs the audio data within the preset time period. When the audio is continuously acquired within the preset time period, and the audio stream is obtained, it can be determined whether the second control intent is obtained within the preset time period.

At block 204, when the second control intent is not obtained within the preset time period, the electronic device is controlled to switch from the second operating state back to the first operating state.

In some embodiments, when the electronic device is in the second operating state, the electronic device may continuously acquire audio within the preset time period to obtain the audio stream, and obtain the second control intent corresponding to the audio stream. The electronic device may switch from the second operating state back to the first operating state when the second control intent is not obtained within the preset time period.

For example, in the listening state of the electronic device, when voice data input by the user is not acquired within the preset time period, or the electronic device does not obtain the second control intent based on the audio stream, the electronic device may quit the listening state, and switch to the non-listening state. For example, the preset time period is 30 seconds, when the electronic device does not obtain the second control intent within 30 seconds, the electronic device may switch to the non-listening state. In this case, when the user wants to interact with the electronic device or control the electronic device, the user needs to input the wake word again.

In some embodiments, the electronic device may be controlled to switch from the second operating state back to the first operating state when the second control intent is not obtained within the preset time period. Thus, when the user does not have the intention to control the electronic device, the electronic device may quit the second operating state, such that the electronic device can be prevented from being always in the listening state or the second operating state, and the energy consumption of the electronic device can be reduced.

In an implementation of the present disclosure, when the electronic device is in the second operating state, a first element in a display interface of the electronic device may be replaced with a second element, and a third element may be displayed. The first element is configured to indicate that the electronic device is in the first operating state, the second element is configured to indicate that the electronic device is in the second operating state, and the third element is configured to prompt inputting the wake word and/or playing audios and videos.

As an example, the current scene is the game scene, the electronic device is in the second operating state or the listening state, in order to facilitate the user to learn the current state information of the electronic device, the first element in the interface of the electronic device may be replaced with the second element. When the second control intent is not obtained within the preset time period, the electronic device may quit the second operating state, in this case, the third element may be displayed to prompt the user to re-enter the wake word.

At block 205, when the second control intent is obtained within the preset time period, a second control instruction matching the second control intent is performed.

In some embodiments, when the second control intent is obtained within the preset time period, the control instruction that matches the second control intent can be performed.

With the speech control method according to embodiments of the present disclosure, configuration information of the second operating state is read to obtain the preset time period, audio is continuously acquired within the preset time period to obtain the audio stream, and to obtain the second control intent corresponding to the audio stream. When the second control intent is not obtained within the preset time period, the electronic device may be controlled to switch from the second operating state to the first operating state, and when the second control intent is obtained within the preset time period, the control instruction matching the second control intent may be performed. Thus, when it is determined the user does not have the intention to control the electronic device within the preset time period, the electronic device may be controlled to quit the second operating state, so as to preventing the electronic device from always being in the second operating state or the listening state, thereby reducing the energy consumption of the electronic device.

On the basis of the above embodiments, when the electronic device is in the second operating state, and the audio stream is acquired within the preset time period, speech recognition may be performed on the audio stream to obtain an information stream, at least one candidate intent may be obtained based on the information stream, and the second control intent that matches the current scene may be selected from the at least one candidate intent. Thus, in the process of switching to other scenes, the user will not be interrupted or affected. Details will be described below.

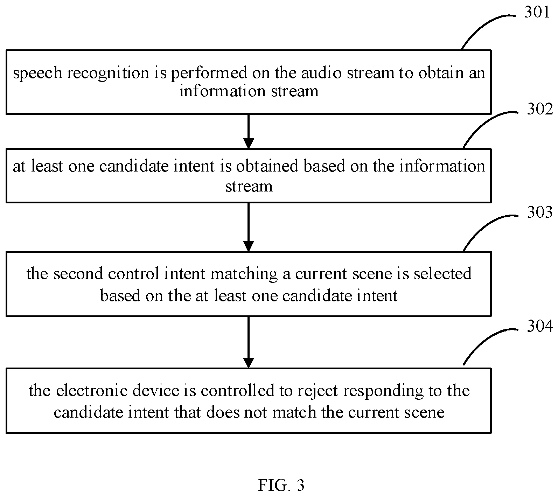

FIG. 3 is a flowchart of a speech control method according to some embodiments of the present disclosure. As illustrated in FIG. 3, the method may further include the following.

At block 301, speech recognition is performed on the audio stream to obtain an information stream.

In some embodiments, in the second operating state of the electronic device, after the user inputs the audio data within the preset time period, the electronic device may acquire the audio stream, and perform speech recognition on the audio stream to determine the corresponding information stream.

At block 302, at least one candidate intent is obtained based on the information stream.

In some embodiments, after the information stream is obtained, the information stream may be semantically recognized to determine the control intent corresponding to the information stream, and at least one candidate intent may be obtained based on the control intents corresponding to the information stream.

At block 303, the second control intent matching a current scene is selected based on the at least one candidate intent.

In some embodiments, after the at least one candidate intent is obtained based on the information stream, the at least one candidate intent may be selected, to obtain the second control intent that matches the current scene, to perform the control instruction that matches the second control intent.

For example, when the current scene is a game scene, the at least one candidate intent obtained may include "play a song" and "purchasing equipment". After selection, the second control intent that matches the game scene may be obtained as "purchasing equipment".

At block 304, the electronic device is controlled to reject responding to the candidate intent that does not match the current scene.

In some embodiments, after at least one candidate intent is obtained based on the information stream, the at least one candidate intent may be selected. When the candidate intent selected does not match the current scene, the electronic device may not respond to it, such that the user's immersive experience will not be interrupted.

As an example, when the current scene is a game scene, the at least one candidate intent obtained may include "play a song" and "purchasing equipment". By selection, it may be obtained that the candidate intent "play a song" does not match the game scene, in this case, the electronic device will not respond to the candidate intent "play a song", to prevent the user from being interrupted during the game play, hereby improving the user experience.

With the speech control method according to embodiments of the present disclosure, information stream is obtained, and at least one candidate intent is obtained based on the information stream, and the second control intent that matches the current scene is selected from the at least one candidate intent, and the candidate intent that does not match the current scene is rejected. Thus, when the electronic device is in the second operating state, and the user continues to input speech data, only the control intent that matches the current scene is responded, thereby ensuring the user's immersive experience in the current scene, and improving the user experience.

The present disclosure further provides a speech control device.

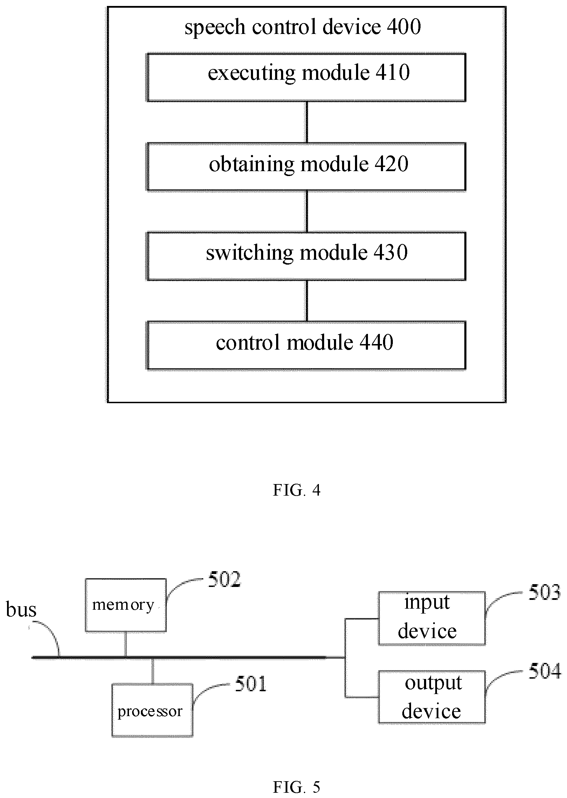

FIG. 4 is a schematic diagram of a speech control device according to some embodiments of the present disclosure.

As illustrated in FIG. 4, the speech control device 400 includes an executing module 410, an obtaining module 420, a switching module 430, and a control module 440.

The executing module 410 is configured to control the electronic device to operate in a first operating state, and acquire an audio clip according to a wake word in the first operating state. The obtaining module 420 is configured to obtain a first control intent corresponding to the audio clip. The switching module 430 is configured to perform a first control instruction matching the first control intent, control the electronic device to switch from the first operating state to a second operating state, continuously acquire audio within a preset time period to obtain an audio stream, and obtain a second control intent corresponding to the audio stream. The control module 440 is configured to perform a second control instruction matching the second control intent.

Moreover, in an embodiment, the switching module 430 is further configured to: read configuration information of the second operating state to obtain the preset time period, continuously acquire the audio within the preset time period to obtain the audio stream, and obtain the second control intent corresponding to the audio stream; and control the electronic device to switch from the second operating state to the first operating state when the second control intent is not obtained within the preset time period. The preset time period is set in response to a user operation.

Furthermore, in an embodiment, the switching module 430 is further configured to: perform speech recognition on the audio stream to obtain an information stream; obtain at least one candidate intent based on the information stream; and select the second control intent matching a current scene from the at least one candidate intent.

In an embodiment, the switching module 430 is further configured to control the electronic device to reject responding to the candidate intent that does not match the current scene.

In an embodiment, the speech control device further includes a determining module, configured to determine that the first control intent matches the current scene.

It should be noted that the foregoing explanation of the embodiment of the speech control method is also applicable for the speech control device of the embodiment, and details are not described herein again.

With the speech control device according to embodiments of the present disclosure, in the first operating state, the audio clip is acquired based on the wake word, a first control intent corresponding to the audio clip is obtained, a first control instruction matching the first control intent is performed, and the first operating state is switched to the second operating state, and in the second operating state, audio is continuously acquired within the preset time period to obtain the audio stream, a second control intent corresponding to the audio stream is obtained, and a second control instruction matching the second control intent is performed. Thus, the user can interact with the electronic device by continuously inputting the audio stream within the preset time period, without inputting the wake word frequently, thereby simplifying user's operation, satisfying different types of user requirements, and improving user experience.

To implement the above embodiments, the present disclosure further provides an electronic device. The device includes at least one processor and a memory. The memory is store executable instructions, and coupled to the at least one processor. When the instructions are executed by the at least one processor, the at least one processor is caused to execute the speech control method according to embodiments of the present disclosure.

To implement the above embodiments, the present disclosure further provides a non-transitory computer readable storage medium having computer instructions stored thereon. When the computer instructions are executed by a processor, the processor is caused to execute the speech control method according to embodiments of the present disclosure.

According to the embodiments of the present disclosure, the present disclosure further provides an electronic device, and a readable storage medium.

FIG. 5 is a schematic diagram of an electronic device according to some embodiments of the present disclosure. Electronic devices are intended to represent various forms of digital computers, such as laptop computers, desktop computers, workbenches, personal digital assistants, servers, blade servers, mainframe computers, and other suitable computers. Electronic devices may also represent various forms of mobile devices, such as personal digital assistant, cellular phones, smart phones, wearable devices, and other similar computing devices. The components shown here, their connections and relationships, and functions are merely examples, and are not intended to limit the implementation of this application described and/or required herein.

As illustrated in FIG. 5, the electronic device includes: one or more processors 501, a memory 502, and interfaces for connecting various components, including a high-speed interface and a low-speed interface. The various components are interconnected using different buses and can be mounted on a common mainboard or otherwise installed as required. The processor may process instructions executed within the electronic device, including instructions stored in or on the memory to display graphical information of the GUI on an external input/output device such as a display device coupled to the interface. In other embodiments, a plurality of processors and / or buses can be used with a plurality of memories and processors, if desired. Similarly, a plurality of electronic devices can be connected, each providing some of the necessary operations (for example, as a server array, a group of blade servers, or a multiprocessor system). A processor 501 is taken as an example in FIG. 5.

The memory 502 is a non-transitory computer-readable storage medium according to the present disclosure. The memory stores instructions executable by at least one processor, so that the at least one processor executes the speech control method according to the present disclosure. The non-transitory computer-readable storage medium of the present disclosure stores computer instructions, which are used to cause a computer to execute the speech control method according to the present disclosure.

As a non-transitory computer-readable storage medium, the memory 502 is configured to store non-transitory software programs, non-transitory computer executable programs and modules, such as program instructions/modules corresponding to the speech control method In an embodiment of the present disclosure (For example, the executing module 410, the first obtaining module 420, the switching module 430, and the control module 440 shown in FIG. 4). The processor 501 executes various functional applications and data processing of the server by running non-transitory software programs, instructions, and modules stored in the memory 502, that is, implementing the speech control method in the foregoing method embodiment.

The memory 502 may include a storage program area and a storage data area, where the storage program area may store an operating system and application programs required for at least one function. The storage data area may store data created according to the use of the electronic device, and the like. In addition, the memory 502 may include a high-speed random access memory, and a non-transitory memory, such as at least one magnetic disk storage device, a flash memory device, or other non-transitory solid-state storage device. In some embodiments, the memory 502 may optionally include a memory remotely disposed with respect to the processor 501, and these remote memories may be connected to the electronic device through a network. Examples of the above network include, but are not limited to, the Internet, an intranet, a local area network, a mobile communication network, and combinations thereof.

The electronic device may further include an input device 503 and an output device 504. The processor 501, the memory 502, the input device 503, and the output device 504 may be connected through a bus or other methods. In FIG. 5, the connection through the bus is taken as an example.

The input device 503 may receive inputted numeric or character information, and generate key signal inputs related to user settings and function control of an electronic device, such as a touch screen, a keypad, a mouse, a trackpad, a touchpad, an indication rod, one or more mouse buttons, trackballs, joysticks and other input devices. The output device 504 may include a display device, an auxiliary lighting device (for example, a LED), a haptic feedback device (for example, a vibration motor), and the like. The display device may include, but is not limited to, a liquid crystal display (LCD), a light emitting diode (LED) display, and a plasma display. In some embodiments, the display device may be a touch screen.

Various embodiments of the systems and technologies described herein may be implemented in digital electronic circuit systems, integrated circuit systems, application specific integrated circuits (ASICs), computer hardware, firmware, software, and/or combinations thereof. These various embodiments may be implemented in one or more computer programs, which may be executed and/or interpreted on a programmable system including at least one programmable processor. The programmable processor may be dedicated or general purpose programmable processor that receives data and instructions from a storage system, at least one input device, and at least one output device, and transmits the data and instructions to the storage system, the at least one input device, and the at least one output device.

These computing programs (also known as programs, software, software applications, or code) include machine instructions of a programmable processor and may utilize high-level processes and/or object-oriented programming languages, and/or assembly/machine languages to implement these calculation procedures. As used herein, the terms "machine-readable medium" and "computer-readable medium" refer to any computer program product, device, and/or device used to provide machine instructions and/or data to a programmable processor (for example, magnetic disks, optical disks, memories, programmable logic devices (PLDs), including machine-readable media that receive machine instructions as machine-readable signals. The term "machine-readable signal" refers to any signal used to provide machine instructions and/or data to a programmable processor.

In order to provide interaction with a user, the systems and techniques described herein may be implemented on a computer having a display device (e.g., a Cathode Ray Tube (CRT) or a Liquid Crystal Display (LCD) monitor for displaying information to a user); and a keyboard and pointing device (such as a mouse or trackball) through which the user can provide input to the computer. Other kinds of devices may also be used to provide interaction with the user. For example, the feedback provided to the user may be any form of sensory feedback (e.g., visual feedback, auditory feedback, or haptic feedback), and the input from the user may be received in any form (including acoustic input, speech input, or tactile input).

The systems and technologies described herein can be implemented in a computing system that includes background components (for example, a data server), or a computing system that includes middleware components (for example, an application server), or a computing system that includes front-end components (For example, a user computer with a graphical user interface or a web browser, through which the user can interact with the implementation of the systems and technologies described herein), or include such background components, intermediate computing components, or any combination of front-end components. The components of the system may be interconnected by any form or medium of digital data communication (egg, a communication network). Examples of communication networks include: local area network (LAN), wide area network (WAN), and the Internet.

The computer system may include a client and a server. The client and server are generally remote from each other and interacting through a communication network. The client-server relation is generated by computer programs running on the respective computers and having a client-server relation with each other.

According to the technical solution according to embodiments of the present disclosure, in the first operating state, the audio clip is acquired based on the wake word, a first control intent corresponding to the audio clip is obtained, a first control instruction matching the first control intent is performed, and the first operating state is switched to the second operating state, and in the second operating state, audio is continuously acquired within the preset time period to obtain the audio stream, a second control intent corresponding to the audio stream is obtained, and a second control instruction matching the second control intent is performed. Thus, the user can interact with the electronic device by continuously inputting the audio stream within the preset time period, without inputting the wake word frequently, thereby simplifying user's operation, satisfying different types of user requirements, and improving user experience.

The various forms of processes shown above can be used to reorder, add, or delete steps. For example, the steps described in this application can be executed in parallel, sequentially, or in different orders, as long as the desired results of the technical solutions disclosed in this application can be achieved, which is no limited herein.

The foregoing specific implementations do not constitute a limitation on the protection scope of the present application. It should be understood by those skilled in the art that various modifications, combinations, sub-combinations, and substitutions may be made according to design requirements and other factors.

## Claims

1. A speech control method, applied to an electronic device, and comprising:
controlling the electronic device to operate in a first operating state, and acquiring an audio clip according to a wake word in the first operating state (101);
obtaining a first control intent corresponding to the audio clip (102);
performing a first control instruction matching the first control intent, and controlling the electronic device to switch from the first operating state to a second operating state;
continuously acquiring audio within a preset time period to obtain an audio stream, and obtaining a second control intent corresponding to the audio stream (103); and
performing a second control instruction matching the second control intent (104, 205).

2. The speech control method according to claim 1, wherein continuously acquiring the audio within the preset time period to obtain the audio stream, and obtaining the second control intent corresponding to the audio stream comprises:
reading configuration information of the second operating state to obtain the preset time period, wherein the preset time period is set in response to a user operation (201);
continuously acquiring the audio within the preset time period to obtain the audio stream, and obtaining the second control intent corresponding to the audio stream (202); and
controlling the electronic device to switch from the second operating state to the first operating state when the second control intent is not obtained within the preset time period (204).

3. The speech control method according to claim 1 or 2, wherein obtaining the second control intent corresponding to the audio stream comprises:
performing speech recognition on the audio stream to obtain an information stream (301);
obtaining at least one candidate intent based on the information stream (302); and
selecting the second control intent matching a current scene from the at least one candidate intent (303).

4. The speech control method according to claim 2 or 3, after obtaining the at least one candidate intent based on the information stream, further comprising:
controlling the electronic device to reject responding to the candidate intent that does not match the current scene (304).

5. The speech control method according to any one of claims 1-4, before controlling the electronic device to switch from the first operating state to the second operating state, further comprising:
determining that the first control intent matches the current scene.

6. A speech control device, applied to an electronic device, and comprising:
an executing module (410), configured to control the electronic device to operate in a first operating state, and acquire an audio clip according to a wake word;
an obtaining module (420), configured to obtain a first control intent corresponding to the audio clip;
a switching module (430), configured to perform a first control instruction matching the first control intent, control the electronic device to switch from the first operating state to a second operating state, continuously acquire audio within a preset time period to obtain an audio stream, and obtain a second control intent corresponding to the audio stream; and
a control module (440), configured to perform a second control instruction matching the second control intent.

7. The speech control device according to claim 6, wherein the switching module (430) is further configured to:
read configuration information of the second operating state to obtain the preset time period, wherein the preset time period is set in response to a user operation;
continuously acquire the audio within the preset time period to obtain the audio stream, and obtain the second control intent corresponding to the audio stream; and
control the electronic device to switch from the second operating state to the first operating state when the second control intent is not obtained within the preset time period.

8. The speech control device according to claim 6 or 7, wherein the switching module (430) is further configured to:
perform speech recognition on the audio stream to obtain an information stream;
obtain at least one candidate intent based on the information stream; and
select the second control intent matching a current scene from the at least one candidate intent.

9. The speech control device according to claim 7 or 8, wherein the switching module (430) is further configured to:
control the electronic device to reject responding to the candidate intent that does not match the current scene.

10. The speech control device according to any one of claims 6-9, further comprising:
a determining module, configured to determine that the first control intent matches the current scene.

11. An electronic device, comprising:
at least one processor; and
a memory, configured to store executable instructions, and coupled to the at least one processor;
wherein when the instructions are executed by the at least one processor, the at least one processor is caused to execute the speech control method according to any one of claims 1-5.

12. A non-transitory computer readable storage medium having computer instructions stored thereon, wherein when the computer instructions are executed by a processor, the processor is caused execute the speech control method according to any one of claims 1-5.
